# EUROPEAN PATENT APPLICATION

(11) **EP 4 846 859 A1**
(43) Date of publication of application: **02.12.2026**
(21) Application number: 25179520.9
(22) Date of filing: 28.05.2025
(51) Int. Cl.: A23L 33/00

(54) **DIET COMPOSITION FOR THE THE TREATMENT OF PERIODONTITIS**

(71) Applicant: L-Nutra Inc., Culver City CA 90230 (US)
(72) Inventor: MAINAS, Giuseppe, London SE1 9RT (GB); IDE, Mark, London SE1 9RT (GB); NIBALI, Luigi, London SE1 9RT (GB); VINCIGUERRA, Manlio, Liverpool L3 3AF (GB); LONGO, Valter, Culver City, CA 90230 (US); HSU, William C., Culver City, CA 90230 (US)
(74) Representative: Botti & Ferrari S.p.A.

(57) **Abstract**

A diet composition for use in the treatment of periodontitis in a human subject, the diet composition comprising:
a fasting mimicking diet component to be administered for a first time period, said fasting mimicking diet component providing less than 50% of the normal caloric intake of the subject with both protein restriction and sugar restriction; and
a re-feeding diet component to be administered for a second time period, said re-feeding diet component providing 60-100% of the normal caloric intake of the subject;
wherein the fasting mimicking diet component and the re-feeding diet component are administered for at least 2 cycles.

## Description

### Technical Field

The present invention relates to the technical field of the pharmaceutical and dietary industries.

In particular, the invention refers to a diet composition for the treatment of periodontitis.

### Prior art

Although periodontitis is a microbially-driven inflammatory disease of the supporting apparatus of the teeth, its effects can be felt systemically and in other organs and tissues¹. Periodontal treatment, consisting of supra-and sub-gingival professional mechanical plaque removal (PMPR), is associated with a short-term acute phase inflammatory response, characterised by elevation of circulating acute-phase inflammatory markers, followed by a longer-term reduction in these molecules². In the intermediate to longer term this is accompanied by changes in markers of peripheral vascular health such as C-reactive protein (CRP)^{3,4,5}.

While a moderate inflammatory response can be beneficial to the early phases of periodontal healing, strategies have been designed to limit its systemic impact^{6,7}. The use of a periodic fasting lasting 2-5 days has emerged as beneficial regarding reduction of biological age and reduced risk of systemic diseases while requiring a lifestyle change for only 5 days a month or less. In particular, a novel approach named fasting-mimicking diet (FMD) showed very promising beneficial effects in terms of reduction of risk factors for aging, diabetes, autoimmunity, cardiovascular disease, neurodegeneration and cancers.

However, a recent clinical study shows that one cycle of FMD does not appear to have significant effects on clinical and microbiological outcomes, as an adjunct to the non-surgical treatment of periodontitis at 3 months⁹.

The technical problem underlying the present invention is therefore to provide an improved remedy for the treatment of periodontitis.

### Summary of the Invention

This problem has been solved by providing a diet composition for use in the treatment of periodontitis in a human subject, the diet composition comprising:
a fasting-mimicking diet component to be administered for a first time period, said fasting mimicking diet component providing less than 50% of the normal caloric intake of the subject with both protein restriction and sugar restriction; and
a re-feeding diet component to be administered for a second time period, said re-feeding diet component providing 60-100% of the normal caloric intake of the subject;
wherein the fasting-mimicking diet component and the re-feeding diet component are administered for at least 2 cycles.

Preferably, the fasting-mimicking diet component and the re-feeding diet component are administered for at least 3 cycles.

Preferably, the periodontitis or periodontal disease is periodontitis stage III-IV, as determined by the definition provided in Tonetti et al., 2018, "Staging and grading of periodontitis: Framework and proposal of a new classification and case definition"¹.

Accordingly, within the meaning of the present invention, with the expression "periodontitis stage III-IV" it is intended severe periodontitis with potential for additional tooth loss (stage III) or advanced periodontitis with extensive tooth loss and potential for loss of dentition.

Specifically, at stage III, periodontitis has produced significant damage to the attachment apparatus and, in the absence of advanced treatment, tooth loss may occur. This stage is characterized by the presence of deep periodontal lesions that extend to the middle portion of the root and whose management is complicated by the presence of deep intrabony defects, furcation involvement, history of periodontal tooth loss/exfoliation, and presence of localized ridge defects that complicate implant tooth replacement. In spite of the possibility of tooth loss, masticatory function is preserved, and treatment of periodontitis does not require complex rehabilitation of function.

At stage IV, periodontitis causes considerable damage to the periodontal support and may cause significant tooth loss, and this translates to loss of masticatory function. In the absence of proper control of the periodontitis and adequate rehabilitation, the dentition is at risk of being lost. This stage is characterized by the presence of deep periodontal lesions that extend to the apical portion of the root and/or history of multiple tooth loss; it is frequently complicated by tooth hypermobility due to secondary occlusal trauma and the sequelae of tooth loss: posterior bite collapse and drifting. Frequently, case management requires stabilization and/or restoration of masticatory function.

With regard to the interdental CAL (Clinical Attachment Loss), it is intended that at periodontitis Stage III-IV interdental CAL at site of greatest loss is equal to or greater than 5 mm.

With regard to the radiographic bone loss, it is intended that at periodontitis stage III-IV the radiographic bone loss is extending to mid-third of root and beyond.

Additionally, as above mentioned, it is intended that at periodontitis stage III-IV there is tooth loss due to periodontitis, in particular of 4 teeth or less (periodontitis stage III) or of minimum 5 teeth (periodontitis stage IV).

The periodontitis or periodontal disease may be additionally defined as periodontitis grade B or C, as determined by the definition provided in Tonetti et al., 2018, "Staging and grading of periodontitis: Framework and proposal of a new classification and case definition"¹.

Accordingly, within the meaning of the present invention, with the expression "periodontitis grade B or C" it is intended that the disease has a moderate rate of progression (grade B) or a rapid rate of progression (grade C).

Specifically, with periodontitis grade B there is radiographic bone loss or CAL (longitudinal data) of less than 2 mm over 5 years. With periodontitis grade C there is radiographic bone loss or CAL (longitudinal data) 2 mm or more over 5 years.

Then, according to another approach, with periodontitis grade B % bone loss/age is between 0.25 to 1.0, with periodontitis grade C % bone loss/age is greater than 1.0.

Preferably, the diet composition according to the present invention is administered to a subgroup of subjects treated with non-surgical periodontal therapy (NSPT).

Specifically, the first cycle of the diet composition according to the present invention is administered to a subgroup of subjects previously treated with non-surgical periodontal therapy (NSPT).

In particular, non-surgical periodontal therapy includes supra- and subgingival professional mechanical plaque removal (PMPR).

More in particular, non-surgical periodontal therapy includes oral hygiene instructions, risk factor control and supra- and subgingival professional mechanical plaque removal (PMPR).

More preferably, the first cycle of FMD starts the same day of the non-surgical periodontal therapy, even more preferably in the morning, specifically at breakfast.

According to a preferred embodiment, the second cycle is administered to a subgroup of subjects treated with non-surgical periodontal treatment at least 45 days prior, more preferably who had received a non-surgical periodontal treatment 45 days prior. More preferably the third cycle is administered to a subgroup of subjects treated with non-surgical periodontal treatment at least 85 days prior, more preferably who had received a non-surgical periodontal treatment 85 days prior.

According to the present invention, the diet composition is administered to human subjects between from 18 to 75 years old.

Preferably, the first time period is from 2 days to 10 days, preferably from 2 to 6 days, more preferably the first time period being 5 days, and/or said second time period is from 7 to 85 days, preferably 25-26 days.

Within the meaning of the present invention, with the term "normal caloric intake of the subject" it is intended the number of calories that the subject consumes in order to maintain its weight.

The normal caloric intake of the subject can be estimated by interviewing the subject and/or by considering the subject weight.

As a rough guide, the normal caloric intake of the subject is on average 2600 kcal/day for men and 1850 kcal/day for women.

After the administration of the fasting-mimicking diet component and optionally before it, said human subject observes a treatment with a re-feeding diet component, namely the patient follows its routinary eating.

Within the meaning of the present invention, with the term "routinary eating" it is intended that, in particular during said second time period, human subjects are not requested to follow any specific pre-determined diet regime.

For example, during said second time period human subjects are free to follow any balanced diet with a caloric intake proportional to their gender, age, height and physical activity routine, in order to maintain their weight.

Preferably, said re-feeding diet component provides 70-100%, more preferably 90-100%, of the normal caloric intake of the subject.

Typically, in the FMD protocol, the subjects' usual diet is replaced for a predefined number of days (e.g., 5 days), just once a month. During said predefined number of days they take the fasting-mimicking diet component and possibly drink plenty of water. In the following 25-26 days they receive the refeeding diet component.

In one embodiment according to the present invention, the fasting-mimicking diet component is provided for 5 days per month and the re-feeding diet component is provided for 25-26 days per month for at least three consecutive cycles, preferably for three consecutive cycles.

Preferably, the fasting-mimicking diet component and the re-feeding diet component are administered for at least 2 cycles, more preferably at least 3 cycles, within a period of at least 3 months, preferably within a period of 12 months, more preferably within a period between 3 and 6 months.

According to a preferred embodiment, the fasting-mimicking diet component and the re-feeding diet component are administered for at least three cycles within a period of 120 days, preferably 90 days.

Preferably, the fasting-mimicking diet component provides the subject with no more than 1200 kcal/day, more preferably it provides the subject 600-1100 kcal/day.

Preferably, the first time period is 5 days and said fasting-mimicking diet component provides the subject with 800-1200 kcal/day for the first day of said first time period and with 600-800 kcal/day for the second to the fifth day of said first time period.

Preferably, the fasting-mimicking diet component provides the subject with no more than 11 kcal/kg of body weight/day, more preferably 2-8 kcal/kg of body weight/day.

In one embodiment, the fasting-mimicking diet component provides the subject with a protein amount less than or equal to 36 g/day, preferably 0-20 g/day.

In particular, the fasting-mimicking diet component provides the subject with a protein amount equal to 36, 20, 10, or 5 or 0 g/day, in increasing order of preference.

According to a preferred embodiment, if carbohydrates are present in the fasting-mimicking diet component, they provide no more than half of the calories provided by the aforementioned diet component.

Preferably, the fasting-mimicking diet component comprises proteins in an amount that is less than 15%, more preferably less than 12%, of the total calories provided by the fasting-mimicking diet component.

Preferably, the fasting-mimicking diet component comprises sugars in an amount that is less than 50%, more preferably less than 48%, of the total calories provided by the fasting-mimicking diet component.

Preferably, said fasting-mimicking diet component comprises fats in an amount that is equal to or more than 40%, more preferably less than 50%, even more preferably less than 48%, of the total calories provided by the fasting-mimicking diet component.

Alternatively, said fasting-mimicking diet component comprises fats in an amount that is between 40% and 80% of the total calories provided by the fasting mimicking diet component.

Preferably, the fasting-mimicking diet component comprises at least 45% calories from fatty acids, up to 5% calories from proteins, in particular plant-based proteins, and up to 50% calories from carbohydrates.

In one embodiment, the fasting-mimicking diet component provides the human subject with the following energy intake, as reported in following Table 1:

**Table 1**

| | Day 1 | Days 2, 3, 4, 5 |
|---|---|---|
| Total calories (kcal) | 800-1200 | 600-800 |
| Fats | 40-48% | 40-47% |
| Carbohydrates | 40-45% | 45-50% |
| Protein | 9-13% | 7-11% |

Preferably, said fasting-mimicking diet component comprises complex carbohydrates from plant sources, which more preferably comprise soy, rice or other cereals.

Preferably, in said fast-mimicking diet component at least 50% of the calories from fatty acids are from coconut oil and tree nuts. The latter more preferably comprise walnuts, macadamia nuts and/or almonds.

Preferably, said fast-mimicking diet component comprises a high content of monounsaturated and polyunsaturated fats and, as mentioned above, a reduced content of proteins and sugars.

Examples of FMD can be found in WO 2014/066426 and WO 2014/12700 publications.

Avantageously, FMD cycles were shown to reduce and modulate pro-inflammatory cytokines, particularly in subjects with high baseline levels of these markers.

Preferably, in gingival crevicular fluid (GCF) the concentration of MMP-8 is reduced to between 0.15 -9.5 mg/l, more preferably 0.20-8.5 mg/l, as measured after 90 days from the start of the administration of the diet composition according to the present invention, which is administered for at least 3 cycles, when compared to GCF concentration of MMP-8, as measured before starting the administration of said diet composition, respectively.

Preferably, in gingival crevicular fluid the IL-6 is reduced to between 0.50 to 2 pg/ml, more preferably 0.75-1.5 pg/ml, as measured after 90 days from the start of the administration of the diet composition according to the present invention, which is administered for at least 3 cycles, when compared to gingival crevicular fluid concentration of IL-6, as measured before starting the administration of said diet composition, respectively.

Advantageously, the administration of the diet composition according to the present invention makes it possible to reduce the inflammation, in particular the bleeding, which is one of the adverse effects of periodontitis. In fact, as exaplained in the examples, in a subject suffering from periodontitis, the treatment makes it possible to reduce the bleeding by approximately 20% after 90 days compared to the 58% observed in the control.

The present invention will be further described with reference to the enclosed drawings and to some embodiments, which are provided below for illustrative and non-limiting purposes.

### Brief description of the drawings

Figure 1 shows a flowchart of the phases of the study carried out when the diet composition according to the present invention is administered according to a preferred embodiment.
Figure 2 represents the CONSORT 2010 Flow Diagram showing the progress through the phases of a parallel randomised trial of two groups, comprising a control group and a group whose member were administered with the dietary composition according to the present invention.
Figure 3 shows a line graph illustrating serum hs-CRP levels in test and control patients at all study timepoints.
Figure 4 shows a line graph of GCF markers (CRP) levels in test and control patients at all study timepoints.
Figure 5 shows a line graph of GCF markers (MMP-8) levels in test and control patients at all study timepoints.

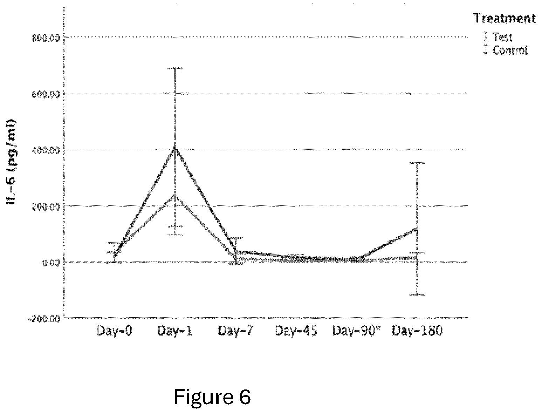

Figure 6 shows a line graph of GCF markers (IL-6) levels in test and control patients at all study timepoints.

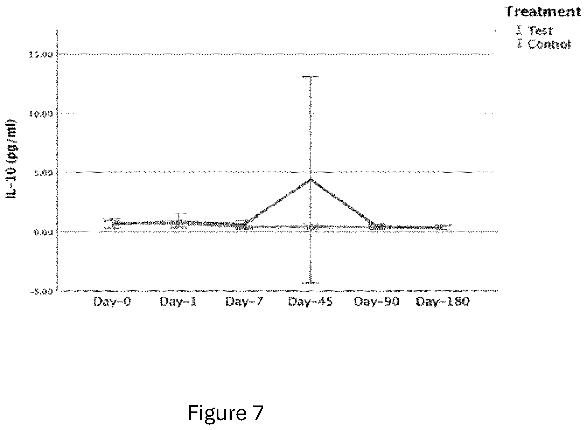

Figure 7 shows a line graph of GCF markers (IL-10) levels in test and control patients at all study timepoints.

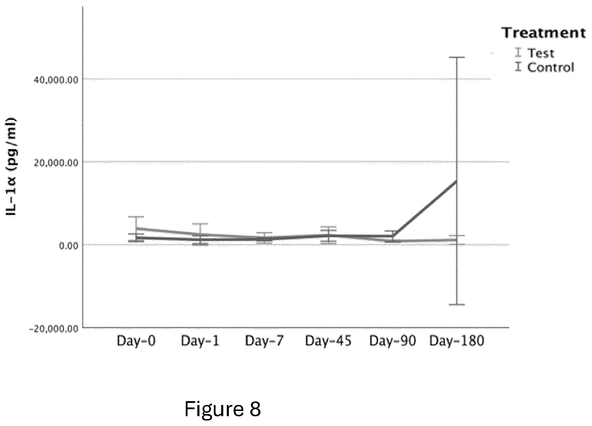

Figure 8 shows a line graph of GCF markers (IL-1α) levels in test and control patients at all study timepoints.

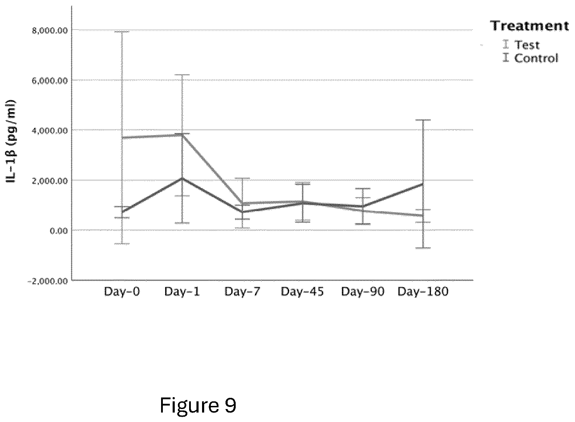

Figure 9 shows a line graph of GCF markers (IL-1β) levels in test and control patients at all study timepoints.

### Detailed Description

The invention relates to a diet composition as described above for the prevention and/or the treatment of periodontitis.

For the purposes of this invention, the following acronyms have the following meanings:

### Acronyms

| Fast Mimicking Diet | FMD |
|---|---|
| Consolidated Standards of Reporting | CONSORT |

| Trials | |
|---|---|
| Body Mass Index | BMI |
| non-surgical periodontal therapy | NSPT |
| probing pocket depth | PPD |
| clinical attachment level | CAL |
| Matrix Metalloproteinases-8 | MMP-8 |
| C Reactive Protein | CRP |
| Interleukin-6; | IL-6 |
| Interleukin-1 alfa | IL-1a |
| Interleukin-1 beta | IL-1b |
| Interleukin-10 | IL-10 |

As previous reported, after the treatment with the fasting-mimicking diet component, the subjects observe said re-feeding diet, namely the patients follow their routinary eating. In particular, during said second time period the patients are not requested to follow any specific pre-determined diet regime.

### Materials and Methods

### Patient population

This was a multicentre feasibility randomised controlled trial. The CONSORT guidelines were followed. Twenty-eight consecutive suitable periodontitis patients referred for treatment were included in this study. Ethics approval for the analysis was given by International University of Catalunya (PER-ECL-2022-02), Complutense University of Madrid (23/411-E), University of Santiago (2023/275), University of Granada (3530/CEIH/2023) and University of Murcia (578/2023). Each patient gave written consent to take part in the study. Patient visit took place from October 2023 to November 2024 at Periodontology departments of the abovementioned five universities. Patients provided written consent to participate after being informed.

The following inclusion criteria were considered for patient recruitment:
- Age 18-70 years
- Generalised periodontitis stage III-IV, grade B or C¹
- Minimum of 24 teeth present
- Self-reported systemic health
- Body mass index: 18.5-30 kg/m² (normal weight to overweight, but not obese)
- Willing and competent (verbally and cognitively) to give written informed consent and complete a medical history form.
- Willing and physically able to carry out all study procedures

Exclusion Criteria were:
- Periodontal treatment in the last 12 months
- Presence of hopeless teeth, acute dental conditions, teeth with endodontic-periodontal lesions and necrotising periodontal diseases
- Smoking (self-reported use of any cigarettes or electronic cigarettes for at least 5 years)
- Mental illness, including severe depression
- Drug dependency
- Hormone replacement therapy (DHEA, oestrogen, thyroid, testosterone)
- Severe hypertension (systolic BP > 200 mm Hg and/or diastolic BP > 105 mm Hg).
- Currently taking part in other clinical trial
- Pregnant or breastfeeding women
- Taking medications and/or systemic antibiotic intake within 3 months preceding the study
- Current orthodontic treatment
- Alcohol intake greater than two drinks daily for women and three drinks daily for men
- Denture wearer/presence of dental implants
- Untreated caries and other significant oral diseases
- Unable or unwilling to complete the dietary intervention
- Special dietary requirements incompatible with the study interventions
- Significant food allergies

### Clinical examination

Following consent, at baseline, self-reported patient medical and smoking histories were taken. The following periodontal measurements were taken at six sites/tooth: dichotomous full mouth plaque scores (FMPS), full mouth probing pocket depth (PPD), recession (REC) of the gingival margin from the cemento-enamel junction (CEJ), bleeding on probing (FMBS), tooth mobility and furcation involvement. Clinical attachment level (CAL) was calculated as PPD+REC. Clinical parameters were assessed by gentle probing using a UNC-15 periodontal probe and a Nabers probe for furcation involvement.

### Randomisation and allocation concealment

Randomisation and allocation concealment were rigorously implemented to ensure the integrity and reliability of the results. The process involved the use of a randomisation sequence generated by sealedenvelope.com randomisation service. Treatment allocation for each patient was printed and placed in sealed envelopes by personnel not directly involved in the study. Subsequently, another member of staff not involved in the study opened these envelopes during the baseline visit and communicated allocation (test or control group) to patients. In brief, test patients received detailed instructions regarding the diet and its products intake, whereas controls were encouraged to continue with their normal diet as usual. This allocation concealment procedure effectively prevented any foreknowledge of group assignment, thereby maintaining the integrity of the randomisation process. Moreover, to minimise potential sources of bias, both the examiner and operator were masked to the group assignment throughout the duration of the study. Masking was preserved also during the statistical analysis, and the randomisation code was only broken following analysis.

### Diet

Patients from the test group underwent three cycles of FMD (ProLon, L-Nutra Inc.). The first cycle started the same day of the non-surgical periodontal therapy (specifically, in the morning, at breakfast, before receiving the treatment); the second cycle was given 45 days after the treatment and, finally, the last one was given 85 days after the treatment. The FMD program is a plant-based diet program designed to attain fasting-like effects while providing both macro- and micronutrients to minimise the burden of fasting and adverse effects. The FMD regime consists of 100% ingredients that are regarded as safe (GRAS) and comprises vegetable-based soups, energy bars, energy drinks, cracker snacks, olives, herbal teas, and supplements. All items were individually boxed to be consumed per day. Water (suggested as 2 litres/day) was the only 'external' item test participants were allowed to ingest during the diet cycle. The FMD consisted of a 5-days regimen that provides approximately 1100 kilocalories for the first day; approximately 750 kilocalories per day for the second to the fifth day. On the 6^{th} day, known as the transition day, patients gradually resumed their usual diet. A normal diet was, then, resumed starting from the 7^{th} day. On the other hand, patients from the control group continued with their normal (ad libitum) diet for the whole study period. Furthermore, dietary anamnesis questionnaires were given at baseline and 6 months, and a food diary was completed during the first week by both test and control patients, to monitor food intake and to check the compliance of test patients.

### GCF sampling

Gingival crevicular fluid (GCF) was collected using Periopaper (OraFlow Inc.) from the mesial sulcus of each first molars of the study participant. GCF sampling was performed prior to periodontal probing, to avoid blood contamination. Periopaper was placed at the entrance of the sulcus until slight resistance was felt and then left for 30s. Samples visually contaminated with blood or diluted with saliva during sampling were discarded. The strips were pooled in an Eppendorf tube and transferred to -80°C. The samples were sent to King's College London (United Kingdom) at the end of the study, where GCF was eluted and stored at -80°C until analysis. In particular, GCF was extracted using PBS with protease inhibitors 1X (1 tablet for 10 ml of PBS) (Complete ULTRA tablets, Mini; EDTA-free). Briefly, 25 µl of PBS/protease inhibitor cocktail was added and centrifuged at 11,000 g for 15 min at 4 _{°}C. An additional 25 µl of PBS/protease inhibitor cocktail was then added and centrifuged at 11,000 g for 15 min at 4 _{°}C, to a total volume of 50 µl.

### Blood sampling

Blood samples were collected from each participant using standard venepuncture techniques. Blood and serum (after centrifugation) were immediately aliquoted in 1.5 ml Eppendorfs and stored at -80°C until analysis following transportation to King's College London. Blood samples consisted of two tubes: one for blood and one for serum. A total of 13-15 mL of whole blood was drawn into sterile vacutainer tubes containing clot activator and gel separator. The tubes were gently inverted to ensure proper mixing of the anticoagulant and the blood sample. Blood was immediately aliquoted in Eppendorfs and stored at - 80 _{°}C. Subsequently, the other samples were allowed to clot at room temperature for 30 min to one hour to facilitate serum separation. Following clot formation, the tubes were centrifuged at 4000 rpm for 5 min. This centrifugation step effectively separated the serum from the clot and cellular components. The resulting serum samples were then carefully transferred into labelled microcentrifuge tubes using a sterile pipette and stored at - 80°C until analysis following transportation to King's College London.

### Biomarkers analyses

Serum and GCF samples were processed by performing high-sensitivity Multi-Analyte ELISAs (Ella^{™} Automated Immunoassay System; ProteinSimple) in order to assess levels of hs-CRP in serum and IL-1α, IL-1β, IL-6, IL-10, CRP and MMP-8 in GCF, according to manufacturer instructions. Each sample was analysed in duplicate for both procedures. The ELLA platform (Ella^{™} Automated Immonoassay System; ProteinSimple) was used to perform multiplex analysis of serum inflammatory biomarkers, allowing simultaneous quantification of multiple analytes in a single run with high sensitivity and reproducibility. This automated immunoassay system utilizes a microfluidic cartridge pre-loaded with specific capture antibodies for each analyte of interest. Serum samples were thawed, centrifuged to remove any debris, and loaded into the cartridge at the recommended dilution factor to ensure accurate detection within the dynamic range of the assay. Each sample was tested in triplicate. The Simple Plex system automatically handled all pipetting, washing, and incubation steps. Following the immunoassay, the cartridge was analysed by the ELLA reader, which measured the fluorescence intensity of the detection antibodies bound to each analyte. The results were automatically generated as analyte concentrations (pg/mL) using built-in software that calculates values based on pre-defined standard curves. The use of ELLA minimized variability and reduced processing time compared to traditional ELISA methods, making it an ideal tool for high-throughput biomarker analysis. The system's precision and accuracy were verified through quality control checks before each assay run.

### Periodontal treatment and follow-ups

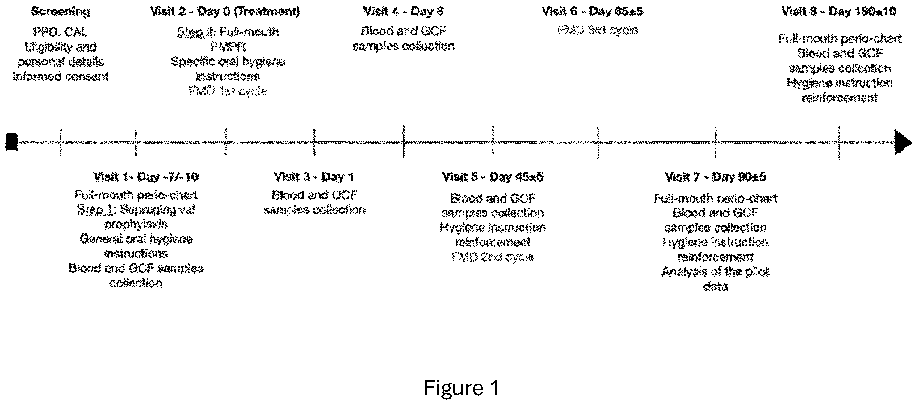

The study flowchart is presented in Figure 1. All patients received a comprehensive treatment plan, aimed at step 1 and 2 of periodontal therapy, including oral hygiene instructions, risk factor control and supra- and sub-gingival PMPR. Steps 1 and 2 were carried out concomitantly in these cases, and a full-mouth treatment approach was employed. The treatment visit included oral hygiene instructions, as well as supra- and sub-gingival instrumentation under local anaesthesia of all four quadrants in one appointment in the morning, using curettes and ultrasonic instruments Patients were then reassessed at day -1, -90 and -180 after treatment.

### Examiner calibration

The study examiners underwent a training exercise and intra-examiner calibrations before the start of the study. All baseline and post-treatment clinical measurements were carried out by a single calibrated examiner in each centre. The examiner was masked to the study groups. In a study sample of five subjects, primary outcome variable (PD) was examined twice, at six sites per tooth. Intra-examiner calibration showed agreements within 1 and 2 mm PPD obtained in 94.3% and 96.5%, respectively (see Table 1). Inter-examiner calibration was not possible for practical reasons.

**Table 1: Intra-examiner calibration for each centre.**

| **Centre** | **Agreement within 1 mm (%)** | **Agreement within 2 mm (%)** |
|---|---|---|
| Barcelona | 91.8% | 95.2% |
| Madrid | 96.5% | 97.8% |
| Santiago | 92.4% | 94.7% |
| Granada | 95.7% | 97.2% |
| Murcia | 94.9% | 96.5% |
| **Overall** | **94.3%** | **96.5%** |

### Statistical analysis and sample size calculation

In the absence of available preliminary data in the literature, this was designed as a randomised controlled trial with internal pilot, including analysis after a convenience sample size of 28 patients, to assess if more patients were needed to achieve power to test the main study hypothesis.

Data from all patients were entered into a spreadsheet and proofed for entry errors. Continuous variables are reported as means and standard deviations. Feasibility was assessed by specific 'progression criteria' (see Table 2).

**Table 2: Feasibility aspects and progression criteria.**

| FEASIBILITY ASPECTS | PROGRESSION CRITERIA | ACHIEVED OR NOT |
|---|---|---|
| Willingness to be randomised | ≥ 50% of approached patients agree | YES |
| Self-reported compliance with diet | ≥ 66% of test group patients self-report compliance (defined as not more than 1 day in which the diet was not followed) | YES |
| Acceptance of blood samples | ≥ 66% of recruited patients have all blood samples taken as per protocol | YES |
| Absence of serious adverse events | No patients report serious adverse events which might be related to the test diet | YES |

The main outcome of the study was circulating hs-CRP levels at 3 months post-treatment. Paired t-tests were used to detect significant changes in clinical parameters between baseline, 3- and 6 months using the patient as unit of analysis. The Shapiro-Wilk Test was applied to verify if the studied biomarkers follow a normal distribution. As no normal distribution was identified, non-parametric tests (Wilcoxon) were used for inter-group hs-CRP and all other biomarkers analyses for detecting differences at each timepoint. Friedman test was used to analyse the differences between overall timepoints for both groups combined. Bivariate correlation analysis was performed to find a correlation between serum and GCF CRP levels.

### Results

### Baseline characteristics

**Table 3. Patient characteristics. Mean ± standard deviation is reported for continuous variables. BMI: Body Mass Index; SD: Standard Deviation**

| | | | | |
|---|---|---|---|---|
| | | Frequency / Average (Mean ± SD) | Frequency / Average (Mean ± SD) | Test vs Control *p*= |

| | | Test (n=14) | Control (n=14) | |
|---|---|---|---|---|
| Age | | 48.2 ± 10.5 | 53.3 ± 7.6 | 0.248 |
| BMI | | 24.96 ± 2.73 | 25.1 ± 2.92 | 0.70 |
| Gender | Male | 7 | 7 | 0.103 |
| | Female | 2 | 12 | |
| Ethnicity | White | 13 | 14 | 1.0 |
| | Afro-Caribbea n | 1 | 0 | |
| Smoking | Never smokers | 12 | 13 | 1.0 |
| | Former smokers | 2 | 1 | |
| Periodontal diagnosis-Stage | III | 9 | 7 | 0.704 |
| | IV | 5 | 7 | |
| Periodontal diagnosis-Grade | B | 11 | 10 | 1.0 |
| | C | 3 | 4 | |
| Periodontal diagnosis-Extent | Localised | 0 | 0 | 1.0 |
| | Generalis ed | 14 | 14 | |

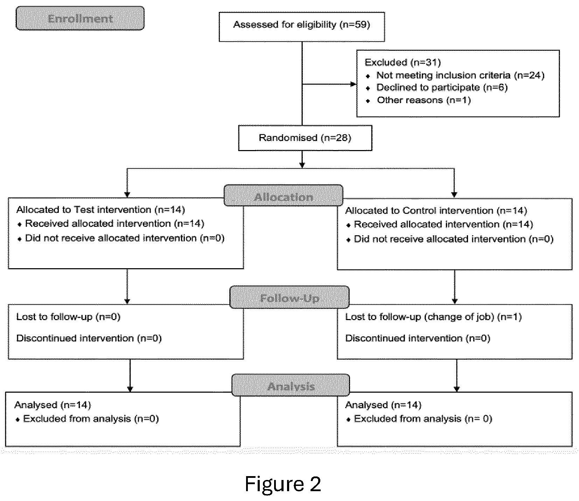

A total of 28 patients were enrolled in the study (Figure 2). Table 3 reports baseline demographic and clinical characteristics of all patients included in the study. Patients allocated to the test group had a higher percentage of females compared with controls (86% vs. 50%), although not statistically significant. No differences were detected between groups at baseline for periodontal clinical measurements. Total non-surgical instrumentation treatment time was 78 minutes in the test group and 80 minutes in the control group.

### Dietary habits

No clear changes in dietary patterns were detected between the start and end of the study, although some slight modifications (e.g., reduced red meat intake, increased fish and vegetables consumption) were noticed in around 85% of FMD patients only. At baseline, only one patient from the test group reported to be vegetarian. Two test and one control patient reported to be on a weight-loss diet. Two test and one control participants reported to be on a hypocaloric diet. One test individual was following a sugar-free and low-fat diet. Among the other controls, one was on an intermittent fasting, one followed a soft diet, another one a ketogenic diet, one was on a cutting and bulking diet, and one was on a gluten-free and lactose-free diet.

Overall, all patients reported a varied food intake at baseline, including regular intake of eggs, milk, cheese/dairy products, whole grains, and lean proteins, with some patients reporting higher red and processed meat consumption than others.

At the end of the study, around 85% of participants (12 out of 14) belonging to the test group showed slight changes in their diet. In details, 3 patients decreased their weekly read meat consumption, 2 patients decreased their weekly process meat consumption, 2 patients decreased cakes/sweets weekly intake, 7 patients increased their weekly fish consumption, 3 patients increased their legumes weekly intake and 3 patients eliminated the intake of carbonated drinks. Besides, 6 patients increased the daily portion consumption of fresh fruit and 5 patients increased the daily portion intake of vegetables.

Furthermore, 5 patients showed a slight increase in daily water consumption.

No substantial changes were noted in terms of weekly consumption of whole grains, nuts, milk and cheese/dairy products. In contrast, patients from the control group did not show any changes in their dietary habits.

### Feasibility, diet and adverse events

Twenty-seven of the patients attended all study visits up to the 6-month visit; one control patient was lost to follow-up as they changed job, making it impossible to attend the visits.

All patients in the test group reported completing the three 5-diet FMD cycles, as confirmed by the food diary completed by the patients for the whole duration of the FMD cycle. No patients reported any serious adverse events, with 5 patients (36%) in the FMD group reporting minor side effects. In detail, one patient reported fatigue and headache on the first day of first FMD cycle, one patient experienced nausea on the second day of the first FMD cycle, one patient reported fatigue and nausea on their first day of the second cycle and two patients described episodes of fatigue and constipation during all cycles. Achievement of all feasibility criteria is reported in previous Table 3.

### Clinical outcomes

**Table 4. Clinical characteristics of test and control patients at baseline and post-NSPT. Means and standard deviations are reported.**

| | Baseline | | 3 months post-NSPT | | 6 months post-NSPT | | Difference baseline-3 months *p*= | Difference baseline-6 months *p*= |
|---|---|---|---|---|---|---|---|---|
| | Test | Control | Test | Control | Test | Control | | |
| Full-mouth plaque score | 60.0 ± 27.7 | 66.5 ± 53.5 | 35.1 ± 29.0 | 30.4 ± 23.9 | 21.1 ± 14.9 | 22.7 ± 13.7 | <0.001 | <0.001 |
| Full-mouth bleeding score | 52.5 ± 19.8 | 58.2 ± 21.3 | 25.7 ± 16.4 | 35.0 ± 16.40 | 20.3 ± 12.4 | 22.3 ± 13.9 | <0.001 | <0.001 |
| Average PPD (mm) | 3.25 ± 0.78 | 3.48 ± 0.79 | 2.86 ± 0.72 | 2.80 ± 0.71 | 2.7 ± 0.64 | 2.83 ± 0.56 | <0.001 | <0.001 |
| Average CAL (mm) | 3.61 ± 1.01 | 4.0 ± 1.07 | 3.4 ± 1.17 | 3.51 ± 0.75 | 3.35 ± 1.05 | 3.60 ± 0.92 | 0.018 | 0.005 |
| Number of PPDs > 4 mm | 29.5 ± 27.0 | 33.9 ± 30.4 | 18.1 ± 17.3 | 18.1 ± 18.9 | 14.6 ± 15.0 | 16.0 ± 12.6 | 0.002 | <0.001 |
| Number of PPDs > 5 mm | 15.9 ± 17.3 | 20.7 ± 25.1 | 8.6 ± 9.3 | 7.9 ± 10.7 | 7.6 ± 10.8 | 6.6 ± 8.0 | 0.004 | <0.001 |

In table 4 clinical parameters of test and control patients at baseline, 3-and 6 months are reported.

Clinical periodontal parameters, including Full Mouth Plaque Score (FMPS), Full Mouth Bleeding Score (FMBS), Probing Pocket Depth (PPD), Clinical Attachment Level (CAL), and the percentage of sites with PPD >4 mm and >5 mm, were recorded following standardized clinical protocols.

FMPS and FMBS were assessed as described by O'Leary et al. (1972), by recording the presence or absence of plaque and bleeding after gentle probing at four sites per tooth (mesial, distal, buccal, and lingual surfaces). FMPS and FMBS were expressed as the percentage of sites with plaque or bleeding over the total number of sites examined.

Probing Pocket Depth (PPD) was measured as the distance (in millimeters) from the gingival margin to the bottom of the periodontal pocket using a calibrated manual periodontal probe (UNC-15 probe) (Lindhe 2015; Carranza 2018). Clinical Attachment Level (CAL) was calculated as the distance from the cemento-enamel junction (CEJ) to the bottom of the pocket, considering gingival recession where present.

The number of periodontal sites with probing pocket depth (PPD) greater than 4 mm and 5 mm, respectively, was recorded for each patient. The values reported in the table represent the absolute count of sites exceeding these thresholds.

Intra-group differences between baseline and 3 months, and between baseline and 6 months showed significant differences for all clinical parameters, whereas there were no inter-group differences for any parameters at any timepoints.

'Pocket closure' (reduction of PPD to < 5mm) was 27 % and 30 % at 6 months for control and test groups respectively. Endpoints of therapy (no PPD ≥ 6 mm and no PPD > 4 mm with no bleeding on probing) were reached in 7 test and 7 control patients (50% of the sample).

### Serum hs-CRP

**Table 5. Serum hs-CRP levels in test and control patients at all study timepoints.**

| | | FMD (n=14) | Control (n=14) | p value for difference test-control |
|---|---|---|---|---|
| Average hs-CRP (mg/l) | Day 0 | 1.79 ± 3.12 | 2.80 ± 2.2 | 0.520 |
| | Day 1 | 5.83 ± 6.87 | 6.41 ± 6.33 | 0.528 |
| | Day 7 | 1.90 ± 5.84 | 3.63 ± 1.07 | 0.073 |
| | Day 45 | 1.87 ± 3.99 | 2.78 ± 8.2 | 0.497 |
| | Day 90 | 0.29 ± 0.31 | 2.42 ± 3.28 | 0.003 |
| | Day 180 | 0.31 ± 0.30 | 2.56 ± 4.51 | 0.008 |

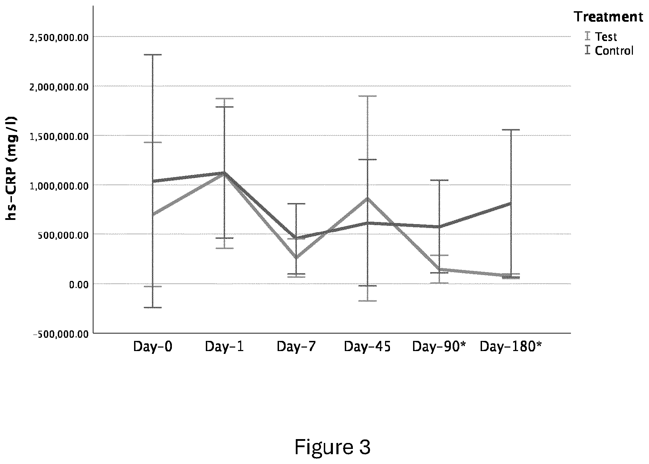

In table 5 and Figure 3 baseline serum hs-CRP levels and changes across the following six study timepoints for patients divided by treatment group are reported. Hs-CRP levels were higher in control compared with test at baseline (not statistically significant). Average overall hs-CRP at baseline was 2.3 ± 5.65 mg/l, increasing at day-1 to approximately 6 mg/l in both groups (p<0.001) then decreasing to less than 2 mg/l at day-7 and -45 in the FMD group but remaining at 3.63 mg/l and 2.78 mg/l in the control group at day-7 and -45, respectively (between group differences not significant). However, at day-90 and -180 hs-CRP levels were lowered to levels below 0.4 mg/l in the FMD group while remaining at approximately 2.5 mg/l in the control group (between group differences p=0.003 day-90, p=0.008 at day-180). Inter-group differences were overall statistically significant throughout the study (p<0.001), showing more marked decreases in the test compared with control group.

### GCF analysis

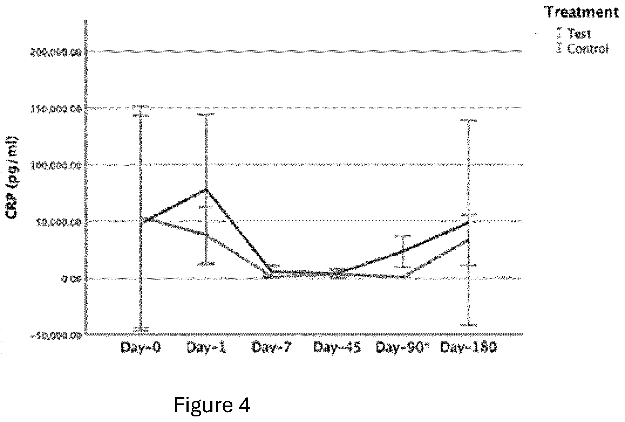

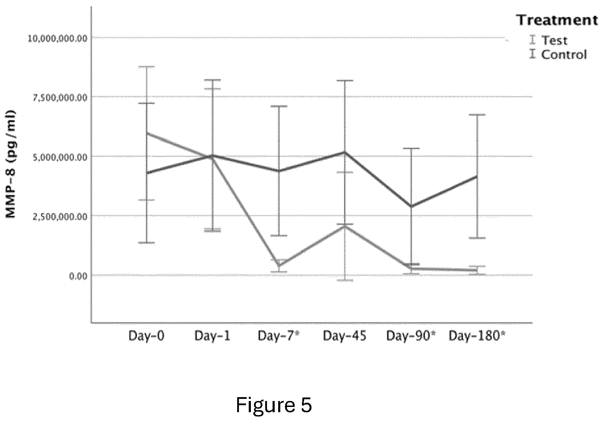

Figure 4 and 5 shows GCF biomarker levels across the six study timepoints for patients divided by treatment group. Majority of test markers tended to decrease from baseline up to day-180, whereas controls tended to increase at day-1, then decrease up to day-90 and increase again up to day-180. FMD group patients had lower MMP-8 at day-7 (p=0.002), day-90 (p=0.009) and day-180 (p<0.001), and lower levels of CRP and IL-6 at day-90 (p=0.023 and p=0.033, respectively) compared with controls (see table 6).

**Table 6: GCF markers levels in test and control patients at all study timepoints.**

| | | **Test (n=14)** | **Control (n=14)** | ***p* value for difference test-control** |
|---|---|---|---|---|
| **Average MMP-8 (mg/l)** | Day 0 | 6.32 ± 4.84 | 3.77 ± 4.71 | 0.097 |
| | Day 1 | 4.45 ± 5.03 | 4.56 ± 5.26 | 0.959 |
| | Day 7 | 3.97 ± 4.51 | 4.36 ± 4.73 | 0.002 |
| | Day 45 | 2.05 ± 3.79 | 5.15 ± 4.83 | 0.062 |
| | Day 90 | 0.27 ± 0.37 | 3.07 ± 4.20 | 0.009 |
| | Day 180 | 0.20 ± 0.30 | 4.42 ± 4.39 | <0.001 |
| **Average CRP (mg/l)** | Day 0 | 0.60 ± 0.01 | 0.51 ± 0.16 | 0.662 |
| | Day 1 | 0.36 ± 0.43 | 0.78 ± 1.15 | 0.662 |
| | Day 7 | 0.01 ± 0.001 | 0.06 ± 0.09 | 0.174 |
| | Day 45 | 0.003 ± 0.05 | 0.004 ± 0.06 | 0.626 |
| | Day 90 | 0.007 ± 0.009 | 0.084 ± 0.04 | 0.023 |
| | Day 180 | 0.28 ± 0.001 | 0.54 ± 0.08 | 0.094 |
| **Average IL-6 (pg/ml)** | Day 0 | 20.1 ± 48.5 | 14.3 ± 30.2 | 0.145 |
| | Day 1 | 23.9 ± 252 | 34.6 ± 433 | 0.190 |
| | Day 7 | 12.2 ± 31.1 | 37.8 ± 74.6 | 0.275 |
| | Day 45 | 4.71 ± 4.95 | 12.1 ± 13.6 | 0.786 |
| | Day 90 | 1.07 ± 1.14 | 4.62 ± 5.13 | 0.033 |
| | Day 180 | 2.36 ± 2.24 | 8.15 ± 19.1 | 0.099 |
| **Average IL-1a (pg/ml)** | Day 0 | 4169 ± 5050 | 1446 ± 1346 | 0.771 |
| | Day 1 | 2433 ± 4679 | 1261 ± 1637 | 0.560 |
| | Day 7 | 1672 ± 2270 | 1290 ± 708 | 0.072 |
| | Day 45 | 2322 ± 3340 | 2164 ± 2096 | 0.124 |
| | Day 90 | 878 ± 508 | 2077 ± 2239 | 0.015 |
| | Day 180 | 1203 ± 1909 | 16332 ± 51852 | 0.409 |
| **Average IL-1b (pg/ml)** | Day 0 | 3930 ± 7565 | 714 ± 400 | 0.017 |
| | Day 1 | 3832 ± 4346 | 2119 ± 3101 | 0.159 |
| | Day 7 | 1124 ± 1787 | 712 ± 492 | 0.560 |
| | Day 45 | 1147 ± 1254 | 1074 ± 1215 | 0.913 |
| | Day 90 | 799 ± 956 | 986 ± 1226 | 0.846 |
| | Day 180 | 586 ± 451 | 1953± 4429 | 0.264 |
| **Average IL-10 (pg/ml)** | Day 0 | 0.64 ± 0.50 | 0.56 ± 0.55 | 0.467 |
| | Day 1 | 0.66 ± 0.41 | 0.87 ± 1.03 | 0.808 |
| | Day 7 | 0.40 ± 0.17 | 0.61 ± 0.61 | 0.771 |
| | Day 45 | 0.43 ± 0.31 | 4.3 ± 13.9 | 0.828 |
| | Day 90 | 0.33 ± 0.23 | 0.40 ± 0.33 | 0.627 |
| | Day 180 | 0.29 ± 0.28 | 0.34 ± 0.32 | 0.467 |

### Serum-GCF hs-CRP correlation

Bivariate correlation analysis revealed a significant correlation at all timepoints between serum and GCF levels of hs-CRP (see Table 7).

**Table 7: Bivariate correlation between levels of CRP in serum and GCF.**

| | | CRP | CRP | CRP | CRP | CRP | CRP |
|---|---|---|---|---|---|---|---|
| | | (Day-0) | (Day-1) | (Day-7) | (Day-45) | (Day-90) | (Day-180) |
| | Correlation Coefficient | 0.832* | | | | | |
| hs-CRP (Day-0) | p value | 0.045 | | | | | |
| hs-CRP (Day-1) | Correlation Coefficient | | 0.742** | | | | |
| | p value | | <0.001 | | | | |
| hs-CRP (Day-7) | Correlation Coefficient | | | 0.731** | | | |
| | p value | | | <0.001 | | | |
| hs-CRP (Day-45) | Correlation Coefficient | | | | 0.628** | | |
| | p value | | | | <0.001 | | |
| hs-CRP (Day-90) | Correlation Coefficient | | | | | 0,551** | |
| | p value | | | | | 0.003 | |
| hs-CRP | Correlation Coefficient | | | | | | 0.709** |
| (Day-180) | p value | | | | | | <0.001 |

| | | | | | | | |
|---|---|---|---|---|---|---|---|
| *p<0.005; **p<0.001 | | | | | | | |

### DISCUSSION

This study is the first to show safety and feasibility of three cycles of fast-mimicking diet (FMD) as an adjunct to non-surgical periodontal therapy, as demonstrated by complete self-reported adherence to the three 5-day diet cycles and from the fulfilled progression criteria.

The feasibility of the FMD was confirmed by the fact that all 14 test patients completed it and only minor adverse events were reported. This means that FMD could be employed in normal-weight systemically healthy patients with periodontitis. Interestingly, dietary habits seemed to slightly change after the completion of the study for test groups, by reporting less intake of meats, cakes/sweets and carbonated drinks, and more consumption of fish, fresh fruit, vegetables and legumes.

Circulating hs-CRP and a panel of six GCF biomarkers were investigated in FMD patients compared with those continuing their normal diet, to investigate the potential effect of the FMD in modulating post-treatment inflammation. We performed full-mouth non-surgical therapy in order to better test the effect of FMD. Serum hs-CRP dynamics following periodontal treatment were in line with what is described in the literature, with an increase immediately after NSPT (day-1), followed by a decrease from day-7 to day-180. The baseline levels of circulating CRP in controls in the present study are similar with the ones observed in previous studies on non-surgical therapy.

A non-significant more effective reduction of CRP was observed already at day-7 in the FMD group which became statistically significant between groups were at day-90 and -180. This is an indication that three cycles of FMD can have a short and long-term role in modulating inflammation in systemically healthy subjects. CRP is considered as a robust marker of systemic inflammation, found to be slightly elevated in patients with periodontitis and to decrease following effective periodontal treatment, as early as one-month post-treatment, with further declines at three monthsThese findings collectively emphasise the dynamic changes in serum CRP levels at different time points following periodontal interventions, reflecting the therapy's impact on systemic inflammatory status. Possible mechanisms for the additional reductions associated with the three cycles of FMD may be reduction of insulin-like growth factor 1 (IGF-1) and activation of autophagy, which collectively reduce oxidative stress and inflammation. Furthermore, FMD might have promoted metabolic reprogramming by shifting the body into a ketonic state, increasing β-hydroxybutyrate levels, which have anti-inflammatory properties. This metabolic adaptation leads to decreased pro-inflammatory cytokine production, including IL-6 and TNF-α, which are upstream regulators of CRP synthesis in the liver.

A very interesting picture emerged from the GCF cytokine analysis, where we found the MMP-8 to be significantly lower in the FMD group at 7-, 90-and 180 days post-treatment. MMP-8 is a collagenase that plays a key role in the breakdown of periodontal connective tissue It is known that elevated active MMP-8 levels in GCF correlate strongly with clinical markers of periodontal destruction, supporting its use as a diagnostic and prognostic biomarker in periodontal disease. CRP in GCF also showed significant differences in the test group at day-90 and day-180. It is also known that increased CRP levels in GCF are associated with more severe periodontal inflammation, suggesting that CRP not only reflects local periodontal pathology but may also indicate a broader systemic inflammatory response.

With this regard, we also found that IL-6 was significantly lower in the FMD group 3 months post-treatment.

It is known that IL-6 is a pro-inflammatory cytokine involved in immune regulation and inflammatory processes and thatElevated IL-6 concentrations in GCF have been shown to correlate with periodontal pocket depth and disease severity.

We detected correlations between serum levels of hs-CRP and GCF levels of CRP, giving strength to the observed results and showing that they follow the same pattern of changes following the diet administration of the composition according to the invention.

To conclude, the present invention confirmed the feasibility of a fasting-mimicking diet in a patient with advanced periodontitis and showed an effect of FMD in modulating the local and systemic inflammatory responses. In fact, the feasibility of at least two and, in particular, at least three-cycle fasting-mimicking diet as an adjunct to non-surgical periodontal therapy and its effect on clinical outcomes and inflammation associated with periodontal treatment was assessed.

### Bibliography

1. Tonetti et al., 2018, "Staging and grading of periodontitis: Framework and proposal of a new classification and case definition", J. Periodontol., 89 (Suppl 1) :S159-S172, https://doi.org/10.1002/JPER. 18-0006
2. Graziani et al., 2010, "Systemic inflammation following non-surgical and surgical periodontal therapy", J Clin Periodontol, 37(9), 848-854. doi:10.1111/j.1600-051X.2010.01585.x
3. D'Aiuto et al., 2018, "Systemic effects of periodontitis treatment in patients with type 2 diabetes: a 12 month, single-centre, investigator-masked, randomised trial", Lancet Diabetes Endocrinol, 6(12), 954-965. doi: 10. 10 16/s2213-8587(18)30038-x
4. Montero et al., 2020, "Impact of periodontal therapy on systemic markers of inflammation in patients with metabolic syndrome: A randomized clinical trial", Diabetes Obes Metab, 22(11), 2120-2132. doi:10.1111/dom.14131
5. Tonetti et al., 2007, "Treatment of periodontitis and endothelial function", N Engl J Med, 356(9), 911-920. doi:10.1056/NEJMoa063186
6. Mainas et al., 2022, "Managing the Systemic Impact of Periodontitis", Medicina (Kaunas), 58(5). doi:10.3390/medicina58050621
7. Neves et al., 2023, "Repurposing Metformin for periodontal disease management as a form of oral-systemic preventive medicine", Journal of Translational Medicine, 21(1), 655; doi: https://doi.org/10.1186/s12967-023-04456-1
8. Longo et al., 2021, "Intermittent and periodic fasting, longevity and disease", Nat Aging, 1(1), 47-59. doi:10.1038/s43587-020-00013-3
9. Mainas et al., 2025, "The application of a fasting-mimicking diet in periodontitis. A feasibility study", Journal of Dentistry, 156, 105644, https://doi.org/10.1016/j.jdent.2025.105644
10. O'Leary TJ, Drake RB, Naylor JE. The plaque control record. Journal of Periodontology. 1972;43(1):38. doi:10.1902/jop.1972.43.1.38
11. Lindhe J, Lang NP, Karring T. Clinical Periodontology and Implant Dentistry. 6th ed. Wiley-Blackwell; 2015
12. Newman MG, Takei H, Klokkevold PR, Carranza FA. Carranza's Clinical Periodontology. 13th ed. Elsevier; 2018

## Claims

1. A diet composition for use in the treatment of periodontitis in a human subject, the diet composition comprising:
a fasting mimicking diet component to be administered for a first time period, said fasting mimicking diet component providing less than 50% of the normal caloric intake of the subject with both protein restriction and sugar restriction; and
a re-feeding diet component to be administered for a second time period, said re-feeding diet component providing 60-100% of the normal caloric intake of the subject;
wherein the fasting mimicking diet component and the re-feeding diet component are administered for at least 2 cycles.

2. The diet composition for the use according to claim 1, wherein the fasting-mimicking diet component and the re-feeding diet component are administered for at least 3 cycles.

3. The diet composition for the use according to claim 1 or 2, wherein the periodontitis is periodontitis stage III-IV.

4. The diet composition for the use according to any one of claims 1-3, wherein the first time period is from 2 days to 10 days, preferably from 2 to 6 days, more preferably the first time period being 5 days, and/or said second time period is from 7 to 85 days, preferably 25-26 days.

5. The diet composition for the use according to any one of claims 1-4, wherein the fasting mimicking diet component and the re-feeding diet component are administered for at least two or at least three cycles within a period of 120 days, preferably 90 days.

6. The diet composition for the use according to any one of claims 1-5, wherein said fasting mimicking diet component provides the subject with no more than 1200 kcal/day, preferably providing to the subject 600-1100 kcal/day.

7. The diet composition for the use according to claim 6, wherein the first time period is 5 days and said fasting mimicking diet component provides the subject with 800-1200 kcal/day for the first day of said first time period and with 600-800 kcal/day for the second to the fifth day of said first time period.

8. The diet composition for the use according to any one of claims 1-7, wherein said fasting mimicking diet component provides the subject with a protein amount less than or equal to 36 g/day, preferably 0-20 g/day.

9. The diet composition for the use according to any one of claims 1-8, wherein said fasting mimicking diet component provides the subject with no more than 11 kcal/kg of body weight/day, preferably 2-8 kcal/kg of body weight/day.

10. The diet composition for the use according to any one of claims 1-9, wherein said fasting mimicking diet component comprises proteins in an amount that is less than 15%, preferably less than 12%, of the total calories provided by the fasting mimicking diet component.

11. The diet composition for the use according to any one of claims 1-10, wherein said fasting mimicking diet component comprises sugars in an amount that is less than 50%, preferably less than 48%, of the total calories provided by the fasting mimicking diet component.

12. The diet composition for the use according to any one of claims 1-11, wherein said fasting mimicking diet component comprises fats in an amount that is equal to or more than 40%, preferably less than 50%, more preferably less than 48%, of the total calories provided by the fasting mimicking diet component.

13. The diet composition for the use according to any one of claims 1-12, wherein said fasting mimicking diet component comprises at least 45% calories from fatty acids and up to 5% calories from plant-based proteins and a maximum of 50% calories from carbohydrates.

14. The diet composition for the use according to claim 2, wherein in gingival crevicular fluid (GCF) the concentration of MMP-8 is reduced to between 0.15 -9.5 mg/l, preferably 0.20-8.5 mg/l, as measured after 90 days from the start of the administration of said diet composition, which is administered for at least 3 cycles, when compared to GCF concentration of MMP-8, as measured before starting the administration of said diet composition, respectively.

15. The diet composition for the use according to claim 2, wherein in GCF the IL-6 is reduced to between 0.50 to 2 pg/ml, preferably 0.75-1.5 pg/ml , as measured after 90 days from the start of the administration of said diet composition, which is administered for at least 3 cycles, when compared to GCF concentration of IL-6, as measured before starting the administration of said diet composition, respectively.
